# EUROPEAN PATENT APPLICATION

(11) **EP 1 833 234 A1**
(43) Date of publication of application: **12.09.2007**
(21) Application number: 06742179.2
(22) Date of filing: 16.06.2006
(51) Int. Cl.: H04M 3/42

(54) **A METHOD AND A TERMINAL UNIT FOR CALLING TERMINAL TO CONTROL PERSONALIZING INFORMATION**

(30) Priority: 06.09.2005 CN 200510098404
(71) Applicant: Huawei Technologies Co., Ltd., Shenzhen, Guangdong Province 518129 (CN)
(72) Inventor: WANG, Jun, 518-129 Shenzhen, Guangdong Province (CN)
(74) Representative: Viering, Jentschura & Partner
(86) International application number: PCT/CN2006/001352
(87) International publication number: WO 2007/028301

(57) **Abstract**

The present invention relates to communication technology, in particular, to a method for controlling individualized information by a calling terminal and a terminal thereof, by means of which the problems that the existing method for realizing individualized information service is complex and occupies too much system resource may be solved. In the technical proposal of the invention,, including: the individualized information is obtained and saved by a calling terminal, and when the calling terminal receives an RBT (Ring Back Tone) of a called terminal, the RBT is shielded and the individualized information is played for the calling terminal user, and the calling terminal waits for the called terminal user to answer. Furthermore, if the calling terminal can implement local individualized information, the calling terminal user may subscribe to an individualized information service from a mobile switching center, so that when a call is switched, the mobile switching center need not send a RBT to the calling terminal, and instead, only a Successful Connection notice is sent, and the calling terminal starts playing the local individualized information upon receiving the notice and waits for the called terminal user to answer. As a result, system media resources may be saved.

## Description

### Field of the Invention

The present invention relates to the communication technology, in particular, to a method for controlling individualized information by a calling terminal, and a terminal device.

### Background of the Invention

In conventional mobile communication services, when a calling terminal calls a called terminal, the calling terminal should hear a monotonous ringing tone of "toot... toot..." before the called terminal answers. However, with the individualized Ring Back Tone (RBT) service popularized, different Ring Back Tones (RBTs), such as a song, a story scenario, a dialog, a piece of music and so on, may be played for the calling terminal according to the customization of the called terminal, rather than the former monotonous and tedious RBT. Obviously, this will improve users' satisfaction and bring considerable incomes to service providers, and the Average Revenue Per User (ARPU) will be raised. However, the existing process of implementing individualized RBT service is complex. It is required to modify or add some communication devices, for example, to modify the Home Location Register (HLR), Mobile Switching Center (MSC) or RBT Server (RBTS). Furthermore, the system is required to control the collaborative operation of multiple communication devices, the information interchange in the system is relatively complex. Moreover, the RBT content of the existing RBT service is usually set by the called terminal user and the calling terminal user cannot select an RBT based on his/her own interest. In fact, the increasing requirements for individualization from users can not be satisfied in the prior art.

### Summary of the Invention

The invention provides a method for controlling individualized information by the calling terminal and a corresponding terminal device, in which the problem that the existing method for implementing individualized information service is complex and occupies too many network resources may be solved.

An embodiment of the present invention provides a method for controlling individualized information by a calling terminal : comprising the following steps:
the calling terminal calling a called terminal via a network device;
the network device determining whether the called terminal is idle, and if the called terminal is idle, connecting the call to the called terminal and sending an RBT (Ring Back Tone) of the called terminal to the calling terminal; or if not, returning a Non-Idle notice to the calling terminal; and
upon receiving the RBT, the calling terminal shielding the received RBT and playing individualized information preset locally; or upon receiving the Non-Idle notice, the calling terminal terminating the call.

Another method for controlling individualized information by a calling terminal based on the same technical concept includes:
the calling terminal calling a called terminal via a network device and playing individualized information preset locally;
the network device determining whether the called terminal is idle, if yes, switching the call to the called terminal and sending an RBT of the called terminal to the calling terminal; if not, returning a Non-Idle notice to the calling terminal; and
upon receiving the RBT, the calling terminal shielding the received RBT while continuously playing the individualized information; or upon receiving the Non-Idle notice, the calling terminal stopping playing the individualized information and terminating the call.

A third method for controlling individualized information by a calling terminal based on the same technical concept includes:
the calling terminal calling a called terminal via a network device, and carrying a service identification in the call request indicating that individualized information shall be played locally;
the network device determining whether the called terminal is idle, if yes, switching the call to the called terminal and returning a Called Terminal Idle notice to the calling terminal according to the service identification; if not, returning a Non-Idle notice to the calling terminal; and
the calling terminal playing a piece of individualized information preset locally upon receiving the Called Terminal Idle notice; or terminating the call upon receiving the Non-Idle notice.

A fourth method for controlling individualized information by a calling terminal based on the same technical concept includes:
the calling terminal calling a called terminal via a network device and playing individualized information preset locally, and carrying a service identification in the call request indicating to play individualized information locally;
the network device determining whether the called terminal is idle, if yes, switching the call to the called terminal and returning an Idle notice to the calling terminal according to the service identification; if not, returning a Non-Idle notice to the calling terminal; and
the calling terminal continuously playing the individualized information upon receiving the Idle notice; or stopping playing the individualized information and terminating the call upon receiving the Non-Idle notice.

Each of the above methods may further include: the calling terminal user presetting the individualized information in the calling terminal, and configuring the calling terminal to carry the service identification in a call request.

In each of the above methods, the individualized information is preset as multiple pieces and saved respectively corresponding to identifications, and the calling terminal plays a piece of individualized information corresponding to a first piece of identification information specified by the calling terminal user among the multiple pieces of identification information after the RBT is shielded.

In each of the above methods, when receiving an Answer notice from the called terminal, the calling terminal stops playing the individualized information; or takes the individualized information corresponding to a second piece of identification information as a background tone and continues to play according to the second piece of identification information specified by the calling terminal user from the multiple pieces of identification information.

In each of the above methods, the calling terminal prompts the user to input an operation command, and executes the operation command during playing the individualized information and/or during playing the individualized information as a background tone, wherein the operation commands include reselecting one piece to continue playing or to stop playing.

In each of the above methods, the calling terminal user sets the corresponding first identification and/or second identification according to different play conditions, wherein the play conditions include different time segments and/or different called numbers and/or terminal locations.
The calling terminal user sets the corresponding first identification and/or second identification according to different play conditions, wherein the play conditions include different time segments and/or different called numbers and/or terminal locations.

In each of the above methods, the individualized information includes: voice mailbox, and/or music information, and/or picture information, and/or video information.

An embodiment of the invention provides a terminal device employing the above method, which includes a control unit, a storing unit and a play unit which are connected to the control unit respectively, wherein the control unit is adapted to instruct the play unit to retrieve individualized information from the storing unit and play according to a call instruction or an operation command input by the user; and/or, to instruct the play unit to stop playing the individualized information according to the call instruction or the operation command input by the terminal user.

The terminal device further includes: an information input unit, which is connected with the storing unit, and is adapted to obtain individualized information and send the information to the storing unit for storing.

The terminal device further includes a format converting unit, which is connected between the information input unit and the storing unit, and is adapted to convert the information input from the information input unit into a format supported by the play unit and send the individualized information to the storing unit.

The information input unit includes:
a downloading subunit, for downloading individualized information from an external information body; and/or
a recording subunit for recording individualized information; and/or
a video-shooting subunit for shooting individualized information; and/or
a photo-taking subunit for taking individualized information.

The embodiments of the invention have the following advantageous effects: by using the device and method of the invention, it may be achieved that individualized information is played on the calling terminal side, and users' requirements for individualization are satisfied without adding any communication device on the network side. In this way, the system resources may be saved.

### Brief Description of the Drawings

Fig.1 is a schematic diagram showing a networking structure of a mobile communication network that can implement the method in accordance with an embodiment of the present invention;

Fig.2 is a schematic diagram showing a main structure of a terminal device that can implement the method in accordance with an embodiment of the present invention;

Fig.3 is a flow chart illustrating a method in accordance with an embodiment of the present invention;

Fig.4 is a flow chart illustrating a method in accordance with another embodiment of the present invention; and

Fig.5 is a flow chart illustrating a method in accordance with still another embodiment of the present invention.

### Detailed Description of the Embodiments

The invention supply a method for implementing individualized information, and the method is: the individualized information is obtained and saved by a calling terminal, an RBT is shielded when the calling terminal receives the RBT from a called terminal, and the calling terminal plays the individualized information for the calling terminal user and waits for the called terminal user to answer. Furthermore, if the calling terminal can implement local individualized information, the calling terminal user may subscribe to an individualized information service from a mobile switching center, so that when a call is connected, the mobile switching center needs not to send an RBT to the calling terminal. Instead, a Successful Connection notice is sent, and the calling terminal starts to play the local individualized information when receiving the notice and waits for an answer from the called terminal user. As a result, network resources may be saved.

The technical scheme according to an embodiment of the invention will now be described in detail in conjunction with the drawings. In the embodiments, a mobile network is taken as an example, while in practice, the method is also applicable to Next Generation Network (NGN), the Third Generation (3G) network, Internet, Voice over IP (VolP) and fixed telephone network, etc.

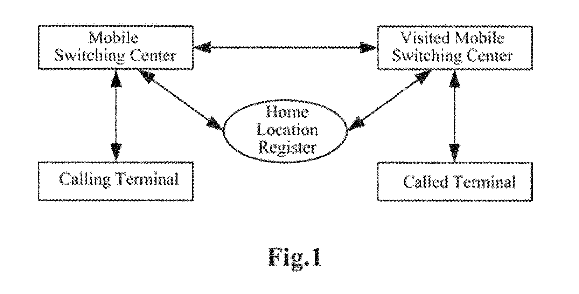

As shown in Fig. 1, a mobile communication network for implementing the method includes the following network devices: a Gateway Mobile Switching Center (GMSC), a Visited Mobile Switching Center (VMSC) and a Home Location Register (HLR). In a calling process: a calling terminal obtains and stores individualized information in advance, the MSC obtains an Mobile Station Roaming Number (MSRN) of the called terminal by visiting the HLR when a call is to be initiated via the MSC, and initiates the call to the Visited Mobile Switching Center (VMSC), the VMSC connects the call to the called terminal.

In the prior art, if it is determined by the VMSC that the called terminal is idle, the VMSC will play an RBT to the calling terminal, or the VMSC will inform an RBT Server (RBTS) to play a customized RBT (i.e., individualized information). However, in an embodiment of the present invention, the RBT is shielded by the calling terminal or the service side, and the calling terminal plays individualized information, which is stored in the calling terminal, to the calling terminal user; and if the calling terminal receives an answer notice from the called terminal, the calling terminal may stop playing the individualized information or turn to play a background tone specified in advance, and at the same time, a session link is established between the calling terminal and the called terminal for transmitting and receiving voice information or video information between the calling and called terminal users.

To implement the method for controlling individualized information according to an embodiment of the invention, a terminal device 100 for playing individualized information locally is provided. The terminal device 100 includes:

**- Units for obtaining and storing individualized information:**

1. an information input unit 101, which includes: a downloading subunit 1011, and/or a sound-recording subunit 1012, and/or a photo-taking subunit 1013, and/or a video-shooting subunit 1014;

The individualized information may be voice, video, pictures and so on. The calling terminal user may select the following obtaining methods according to the format supported by the terminal device and the capacity of the terminal device:

1) the downloading unit 1011 downloads from a website of a content provider, a personal computer and so on, or

2) the sound-recording subunit 1012, and/or the photo-taking subunit 1013 and/or the video-shooting subunit 1014 may generate the individualized information.

There are various types of individualized information generated, including: photos, voice or short video recorded and so on. The individualized information may be processed on a personal computer before being downloaded to the terminal device.

2. a format converting unit 102;

The format converting unit 102 is used for converting the received individualized information to a format supported by playing software, such as the format of MP3, MIDI, WAV or MPG4, etc., and storing the converted individualized information in an information storing unit 103.

3. the information storing unit 103;

The information storing unit 103 is used for storing the converted individualized information.

**- Units for controlling the play of the individualized information:**

4. a control unit 104

The functions of the control unit 104 may be integrated with the main control unit of a terminal device. The control unit 104 is used for exchanging call instructions with the network device, shielding the RBT received, and controlling a play unit 105 to obtain current individualized information specified by the user from the information storing unit 103 and play according to a preset mode (individualized information or background tone).

The play mode of the individualized information specified by the user may be stored in the control unit in a form of a control list. Definition parameters may be set in the control list, and the definition parameters may be a called number, a time segment and so on. Different definition parameters correspond to different individualized information identifications. After a call request sent by the calling terminal is detected, the correlation between actual parameters (such as called number, current time and so on) and the control list is determined and the corresponding individualized information identification is searched, the individualized information identification and the trigger signal are output together to the play control unit, so that individualized information may be played or no individualized information will be played.

Or, the control unit 104 is further used for storing the identification of individualized information preset by the terminal user as a background tone, and determining whether the individualized information played currently has been preset as a background tone after the control unit 104 detects that the called terminal user answers. If the currently played individualized information has been preset as the background tone, the individualized information will be continued to be played during the conversation. At this time, the called terminal user may also hear the individualized information via the voice link. If the currently played individualized information has not been preset as the background tone, the calling terminal stops playing the individualized information and establishes the conversation. The individualized information played currently may not be the background tone set by the calling terminal user (such as a graceful melody). At this time, the control unit 104 reselects individualized information via the background tone identification, and the reselected information will be played as the background tone. Of course, the individualized information to be played as the background tone may be processed so as to have a suitable sound effect. For example, the control device of the calling terminal may notify the play device to lower the volume or to change the tone, etc.

Furthermore, there are two ways of controlling the play of individualized information: playing the individualized information automatically as preset by a terminal user; or prompting a terminal user via a display screen to use push-buttons so as to control the playing individualized information when a conversation is established or during the conversation.

5. a play unit 105:

A software player is stored in the play unit 105, which may receive trigger signals and individualized information identifications sent from the control unit 104, read and play the corresponding individualized information from the information storing unit 103 according to the individualized information identification.

6. a display screen 106, a speaker 107 and a keyboard 108:

The display screen 106, the speaker 107 and the keyboard 108 are used for playing video, pictures and sound, and may be implemented by using the functional module(s) originally existed in the terminal device.

The control unit is connected to the display screen 106, the speaker 107 and the keyboard 108 respectively. When it is required to shield an RBT, a switch for controlling a circuit of shielding RBT may be switched on. The control unit 104 may control the display screen 106 to display the title of downloaded individualized information, prompt the user to set or modify the identification information correspondingly, and prompt the user to establish or modify a control list. The user may perform various settings and controls via the keyboard or a touch screen, including modifying the control list, adding or deleting the individualized information, playing the individualized information for test and so on, the specific implementation of these functions is well known to a person of ordinary skill in the art and will not be described here.

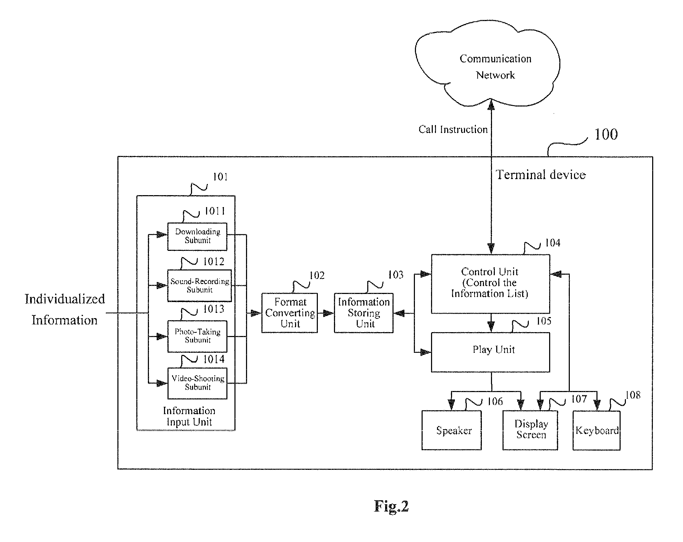

The terminal device 100 shown in Fig.2 may be a mobile terminal device, or a fixed terminal device.

When the terminal device 100 is a mobile terminal device, the method according to an embodiment of the invention may be implemented by the following process after the mobile terminal device is linked to the mobile communication network.

Embodiment 1

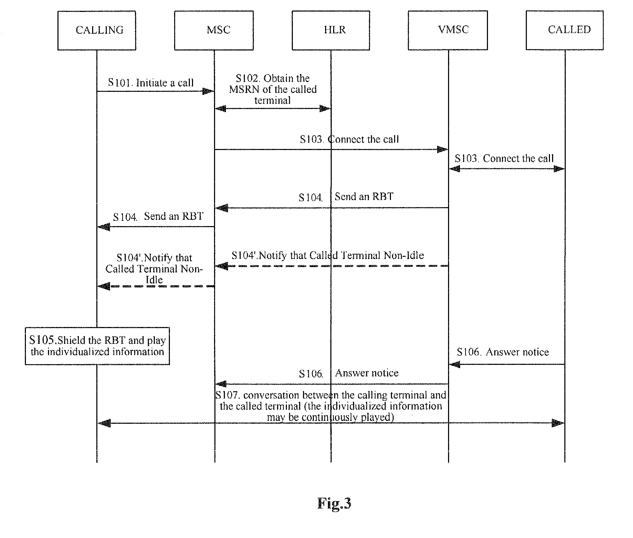

In embodiment 1, the calling terminal user does not subscribe to an individualized information service from a mobile switching center. The individualized information function is set in the calling terminal, and individualized information is played when the calling terminal shields an RBT, as shown in Fig.3. The process includes:

S101: the MSC of a calling terminal initiates a call request to a called terminal, the call request contains at least a mobile directory number (MDN) of the called terminal;

S102: the MSC accesses the HLR to obtain the Mobile Station Roaming Number (MSRN) of the called terminal, and gets informed that the called terminal has not subscribed to individualized information service;

S103: the MSC connects the call to the VMSC in which the called terminal is located via the MSRN of the called terminal, and the VMSC forwards the call request to the called terminal;

S104: if the called terminal is idle, the VMSC sends an RBT to the calling terminal via the MSC; otherwise, S104' is executed, that is, if the called terminal is not idle (for example, busy for a conversation), the VMSC sends a Called Terminal Non-Idle notice to the calling terminal via the MSC, and the calling terminal hangs up and terminates the operation when receiving the Called Terminal Non-Idle notice;

S105: the control unit of the calling terminal shields the received RBT and analyzes the correlation between actual parameters and an individualized information mapping list, for example, different individualized information should be played for different called terminals, then the control unit notifies the play unit of a matched individualized information identification according to the mapping list;

S106: the called terminal user answers. At this time, the called terminal sends an Answer notice to the VMSC, and the VMSC delivers the Answer notice to the MSC;

S107: the MSC establishes a link between the calling terminal and the called terminal, and the conversation between the calling terminal and the called terminal is implemented. Here, before establishing the link between the calling terminal and the called terminal, the calling terminal may stop playing the individualized information, or may not stop playing the individualized information but take the individualized information as a Background Tone. The calling terminal user may configure the background sound effect so that the calling terminal may suitably adjust the sound effect or the content of individualized information after establishing the link between the calling terminal and the called terminal. For example, the calling terminal user may set a romantic sound effect so that there will be a romantic atmosphere during the conversation.

In the above process, when playing the individualized information and/or when using the individualized information as a background tone during conversation, the control unit may prompt the terminal user via a display screen to shut down the individualized information or to play other individualized information, and the terminal user may input an operation command via a touch screen or a keyboard.

Embodiment 2

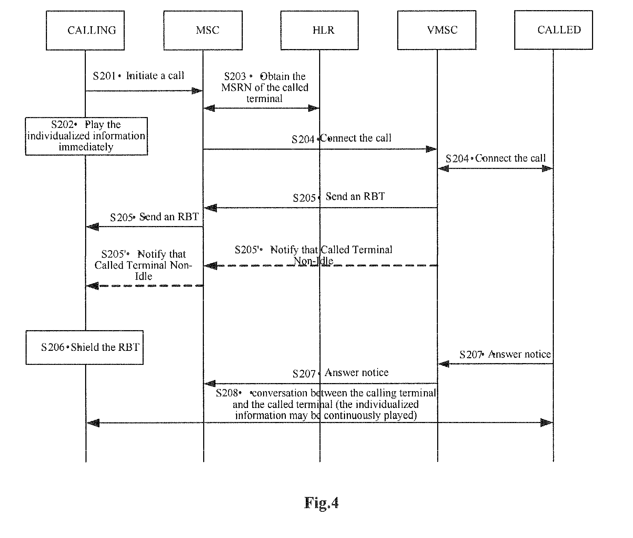

In embodiment 2, the calling terminal user does not subscribe to an individualized information service from a mobile switching center. The individualized information function is set in the calling terminal, and the calling terminal plays the individualized information immediately after initiating a call request, as shown in Fig.4. The process includes:

S201: the calling terminal initiates a call request to the called terminal via the MSC, the call request contains at least the MDN of the called terminal;

S202: the calling terminal sends a trigger signal and an identification of individualized information to the play unit, so that the play unit may read and play the corresponding individualized information in the information storing unit. The control unit of the calling terminal may analyze the correlation between the actual parameters and an individualized information mapping list. For example, different individualized information could be played for different called terminals.

In S202, the control unit may prompt the terminal user via a display screen to stop playing the individualized information or to play other individualized information. The terminal user may input an operation command via a touch screen or a keyboard. If the terminal user chooses to play, the step S203 is executed; otherwise, the terminal waits for the RBT so as to start playing the individualized information as in Embodiment 1;

S203: the MSC accesses the HLR to obtain the MSRN of the called terminal, and is informed that the called terminal has not subscribed to an RBT service;

S204: the MSC connects the call to the VMSC in which the called terminal is located via the MSRN of the called terminal, and the VMSC forwards the call request to the called terminal;

S205: if the called terminal is idle, the VMSC sends an RBT to the calling terminal via the MSC. If the called terminal is not idle (for example, busy for a conversation), the VMSC sends a Called Terminal Non-Idle notice to the calling terminal via the MSC;

S206: the control unit of the calling terminal shields the RBT sent from the VMSC;

S207: the called terminal user answers. At this time, the called terminal sends an answer notice indicating that the called terminal user answers to the VMSC, and the VMSC delivers the answer notice to the MSC;

S207: the MSC establishes a link between the calling terminal and the called terminal, and the conversation between the calling terminal and the called terminal is implemented. Here, before establishing the calling-called session link, the calling terminal may stop playing the individualized information, or may not stop playing the individualized information but take the individualized information as a background tone.

Similarly, when playing the individualized information and/or when using the individualized information as a background tone during conversation, the control unit may prompt the terminal user via a display screen to shut down the individualized information or to play other individualized information, and the terminal user may input an operation command at any moment via a touch screen or a keyboard to control.

Embodiment 3

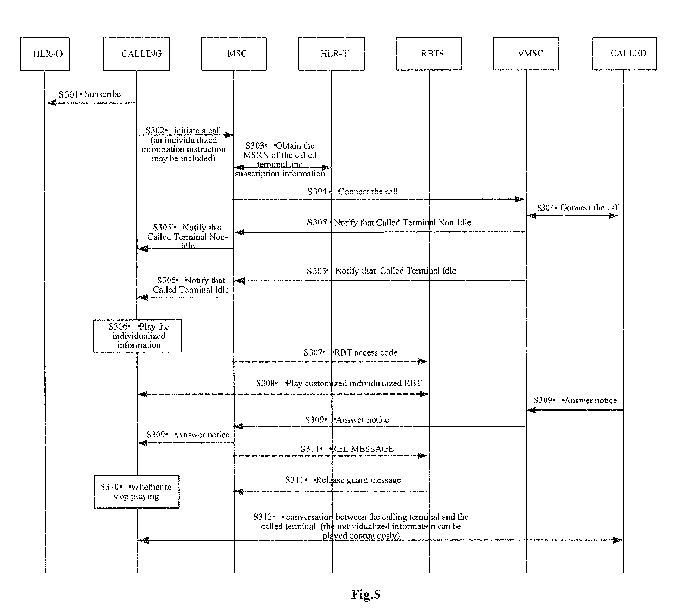

In this embodiment, control of the service network is added. The calling terminal user subscribes to an individualized information service from a mobile switching center, and the RBT is shielded on the service side. As shown in Fig.5, the called terminal user subscribes to a common individualized information service from a VMSC. The process includes:

S301: to be provided with the individualized information service, the calling terminal subscribes on a calling home location register HLR-O and activates an individualized information control function on the terminal device;

If the calling terminal user does not subscribe to an individualized information service, the individualized information service cannot be enjoyed. Here the control power of the service side is emphasized, which has at least the following advantages:

1) when a call request from a calling terminal is received, a default RBT may be suspended by the VMSC, so that it may be avoided that the VMSC sends a meaningless RBT to the calling terminal unwittingly. In this way, communication resources may be saved;

2) the mobile switching center may make a charging scheme for the individualized information service.

If a terminal user subscribes to an individualized information service, it is also required to configure the terminal device so as to activate the control function of the terminal device; otherwise, the control unit could not shield the RBT, and could not implement the control function of playing individualized information. Further controls are possible via a control list. For example, a calling terminal user may choose to play the individualized information when the calling terminal user calls a relative or a friend, and not to play the individualized information when the calling terminal user calls a stranger, instead, a conventional RBT or another customized individualized RBT may be played to the stranger when the stranger is called. Or the calling terminal user may choose the individualized information to be played in non-working hours, and choose an RBT to be played during working hours.

S302: the calling terminal user initiates a call to the called terminal via a GMSC (Gateway Mobile Switching Center). The call includes at least the MDN of the called terminal. When the terminal control unit determines according to a control list that the calling terminal user intends to play individualized information, an individualized information instruction will be inserted in the call request; if the calling terminal is not to play individualized information, the call request will be the same as a common call request;

S303: the MSC accesses the called home location register HLR-T to obtain the Mobile Station Roaming Number (MSRN) of the called terminal and related subscription information, and is further informed that the called terminal has subscribed to an individualized RBT service, and obtains the RBT access code of the called terminal in the RBTS;

S304: the MSC connects the call to the VMSC in which the called terminal is located via the MSRN of the called terminal, and the VMSC forwards the call request to the called terminal;

S305: if the called terminal is idle, the VMSC sends a Called Terminal Idle notice to the MSC, and the MSC sends the notice to the calling terminal; otherwise, S305' is executed, that is, if the called terminal is not idle (for example, busy for a conversation), the VMSC sends a Called Terminal Non-Idle notice to the MSC, and the MSC sends the notice to the calling terminal;

The Terminal Idle notice is a signaling newly added to implement the method according to the embodiment of the invention. The signaling format is well known to those skilled in the art, and will not be described here.

S306: if the calling terminal chooses to play individualized information, the control unit notifies the play unit to play the individualized information, and S309 will be executed; otherwise, S307 will be executed;

S307: if the calling terminal chooses not to play the individualized information, the MSC establishes a link to a RBT Server (RBTS) via the RBT access code of the called terminal obtained in the HRL;

S308: the RBTS plays an individualized RBT subscribed to by the called terminal to the calling terminal;

S309: the called terminal user answers. At this time, the called terminal sends an answer notice to the VMSC, and the VMSC delivers the answer notice to the MSC. The subsequent process is branched into two circumstances depending on whether individualized information or an RBT is played by the calling terminal, as shown in S310 and S311 respectively;

S310, in the circumstance where the calling terminal plays individualized information: the MSC sends an answer notice from the called terminal to the calling terminal. Here, before establishing a link between the calling terminal and the called terminal, the calling terminal may stop playing the individualized information, or the calling terminal may not stop playing the individualized information but take the individualized information as a background tone;

S311, in the circumstance where the calling terminal plays a subscribed RBT: the MSC sends to the RBTS an releasing message REL for releasing the RBT link. When receiving the REL message, the RBTS releases the guard on the link and sends a release guard (RLG) message to the MSC;

S312: a link between the calling terminal and the called terminal is established, and the conversation between the calling terminal and the called terminal is implemented. The voice signals from the calling and called terminal users are received and transmitted. Of course, the background tone may also be received and transmitted.

Similarly, when playing the individualized information and/or when using the individualized information as a background tone during conversation, the control unit may prompt the terminal user via a display screen to shut down the individualized information or to play other individualized information, and the terminal user may input an operation command at any moment via a touch screen or a keyboard.

Embodiment 4

When the terminal user has subscribed to an individualized information service, the terminal user may start playing the individualized information immediately after initiating a call. The process is similar to Embodiment 2 and will not be described here.

Additional advantages and modifications will be apparent to a person of ordinary skill in the art. Therefore, the invention in its broader aspects is not limited to the specific details and representative embodiments shown and described above. Accordingly, various changes and modifications are available without departing from the spirit or scope of the invention as defined by the appended claims and their equivalents.

## Claims

1. A method for controlling individualized information by a calling terminal, comprising:
calling a called terminal by the calling terminal via a network device;
determining whether the called terminal is idle by the network device, and if the called terminal is idle, connecting the call to the called terminal and sending a ring back tone of the called terminal to the calling terminal; or if the called terminal is not idle, returning a Non-Idle notice to the calling terminal; and
shielding the ring back tone and playing individualized information preset in the calling terminal when receiving the ring back tone; or terminating the call upon receiving the Non-Idle notice.

2. The method according to claim 1, further comprising: presetting the individualized information in the calling terminal by a calling terminal user.

3. The method according to claim 2, wherein the individualized information is preset as multiple pieces and stored respectively corresponding to identifications, and the calling terminal plays a piece of individualized information corresponding to a first identification specified by the calling terminal user from multiple identifications after the ring back tone is shielded.

4. The method according to claim 3, wherein when the calling terminal receives an Answer notice from the called terminal in the case that the ring back tone is shielded and the individualized information is playing, the calling terminal stops playing the individualized information; or a piece of individualized information corresponding to a second identification is played as a background tone, the second identification being specified by a calling terminal user from the multiple identifications.

5. The method according to claim 4, wherein the calling terminal prompts the calling terminal user to input an operation command, and executes the operation command when playing the individualized information and/or when the individualized information is played as the background tone, wherein the operation command includes reselecting a piece of individualized information to continue playing or stopping playing.

6. The method according to claim 3, 4 or 5, wherein the calling terminal user sets the corresponding first identification and/or second identification according to different play conditions, the play conditions comprising different time segments and/or different called numbers and/or different terminal locations.

7. The method according to claim 6, wherein the individualized information includes:
voice information, and/or music information, and/or picture information, and/or video information.

8. A method for controlling individualized information by a calling terminal, comprising:
calling, by a calling terminal, a called terminal via a network device and playing individualized information preset in the calling terminal;
determining whether the called terminal is idle by the network device, and if the called terminal is idle, connecting the call request to the called terminal and sending an ring back tone of the called terminal to the calling terminal; or if the called terminal is not idle, returning a Non-Idle notice to the calling terminal; and
shielding the ring back tone and continuously playing the individualized information by the calling terminal when receiving the ring back tone; or stopping playing the individualized information and terminating the call upon receiving the Non-Idle notice.

9. The method according to claim 8, further comprising: presetting the individualized information on the calling terminal by a calling terminal user.

10. The method according to claim 9, wherein the individualized information is preset as multiple pieces and stored respectively corresponding to identifications, and after calling the called terminal, the calling terminal plays individualized information corresponding to a first identification specified by the calling terminal user from multiple identifications.

11. The method according to claim 10, wherein when the calling terminal receives an Answer notice from the called terminal in the case that the ring back tone is shielded and the individualized information is playing, the calling terminal stops playing the individualized information; or a piece of individualized information corresponding to a second identification is played as a background tone, the second identification being specified by a calling terminal user from the multiple identifications.

12. The method according to claim 11, wherein the calling terminal prompts the calling terminal user to input an operation command and executes the operation command when playing the individualized information and/or when playing the individualized information as the conversation background tone, wherein the operation command includes reselecting a piece of individualized information to continue playing or stopping playing.

13. The method according to claim 10, 11 or 12, wherein the calling terminal user sets the corresponding first identification and/or second identification according to different play conditions, wherein the play conditions include different time segments and/or different called numbers and/or terminal locations.

14. The method according to claim 13, wherein the individualized information includes:
voice information, and/or music information, and/or picture information, and/or video information.

15. A method for controlling individualized information by a calling terminal, comprising:
sending a call request by a calling terminal requesting to initiate a call to a called terminal via a network device, a service identification being carried in the call request indicating that individualized information should be played by the calling terminal;
determining whether the called terminal is idle by the network device, if the called terminal is idle, connecting the call to the called terminal and returning a Called Terminal Idle notice to the calling terminal according to the service identification; if the called terminal is not idle, returning a Non-Idle notice to the calling terminal; and
playing, by the calling terminal, individualized information preset in the calling terminal when receiving the Called Terminal Idle notice; or terminating the call when the calling terminal receives the Non-Idle notice.

16. The method according to claim 15, further comprising: presetting the individualized information in the calling terminal by a calling terminal user, and configuring the calling terminal to carry the service identification in the call request.

17. The method according to claim 16, wherein the individualized information is preset as multiple pieces and stored respectively corresponding to identifications, the calling terminal plays a piece of individualized information corresponding to a first identification when receiving the Idle notice, the first identification being specified from multiple identifications by the calling terminal user.

18. The method according to claim 17, wherein when the calling terminal receives an Answer notice from the called terminal in the case that the Idle notice is received and the individualized information is being played, the calling terminal stops playing the individualized information; or a piece of individualized information corresponding to a second identification is played as a background tone, the second identification being specified from multiple identifications by a calling terminal user.

19. The method according to claim 18, wherein the calling terminal prompts the calling terminal user to input an operation command and executes the operation command when playing the individualized information and/or when playing the individualized information as the background tone, wherein the operation command includes reselecting a piece of individualized information or stopping playing.

20. The method according to claim 17, 18 or 19, wherein the calling terminal user sets the corresponding first identification and/or second identification according to different play conditions, wherein the play conditions include different time segments and/or different called numbers and/or terminal locations.

21. The method according to claim 20, wherein the individualized information includes:
voice information, and/or music information, and/or picture information, and/or video information.

22. A method for controlling individualized information by a calling terminal, comprising:
sending a call request by a calling terminal requesting to initiate a call to a called terminal via a network device and playing individualized information preset in the calling terminal, a service identification being carried in the call request indicating that individualized information should be played locally;
determining whether the called terminal is idle by the network device, if the called terminal is idle, connecting the call to the called terminal and returning an Idle notice to the calling terminal according to the service identification; if the called terminal is not idle, returning a Non-Idle notice to the calling terminal; and
continuously playing the individualized information by the calling terminal when receiving the Idle notice; or, stopping playing the individualized information and terminating the call when receiving the Non-Idle notice.

23. The method according to claim 22, further comprising: presetting the individualized information in the calling terminal by a calling terminal user, and configuring the calling terminal to carry the service identification in the call request.

24. The method according to claim 23, wherein the individualized information is preset as multiple pieces and stored respectively corresponding to an identification, and after the ring back tone is shielded, the calling terminal plays a piece of individualized information corresponding to a first identification specified by the calling terminal user from multiple identifications.

25. The method according to claim 24, wherein when the calling terminal receives an Answer notice from the called terminal in the case that the Idle notice is received and the individualized information is being played, the calling terminal stops playing the individualized information; or a piece of individualized information corresponding to a second identification is played as a background tone, the second identification being specified from multiple identifications by a calling terminal user.

26. The method according to claim 25, wherein the calling terminal prompts the calling terminal user to input an operation command, and executes the operation command when playing the individualized information and/or when the individualized information is played as a background tone, wherein the operation command comprises reselecting a piece of individualized information or stopping playing.

27. The method according to claim 24, 25 or 26, wherein the calling terminal user sets the corresponding first identification and/or second identification according to different play conditions, wherein the play conditions include different time segments and/or different called numbers and/or terminal locations.

28. The method according to claim 27, wherein the individualized information includes: voice information, and/or music information, and/or picture information, and/or video information.

29. A terminal device comprising a control unit, further comprising: a storing unit and a play unit connected to the control unit respectively, wherein the control unit is adapted to instruct the play unit to retrieve individualized information from the storing unit and play the retrieved individualized information according to a call instruction or an operation command input by a terminal user, and is further adapted to shield an ring back tone when receiving a ring back tone; and/or instruct the play unit to stop playing the individualized information according to the call instruction or the operation command input by the terminal user.

30. The terminal device according to claim 29, further comprising:
an information input unit, connected to the storing unit, is configured to obtain individualized information and send the obtained individualized information to the storing unit.

31. The terminal device according to claim 30, further comprising:
a format converting unit, connected between the information input unit and the storing unit, is adapted to convert the individualized information input from the information input unit into a format supported by the play unit and send the converted individualized information to the storing unit.

32. The terminal device according to claim 30 or 31, wherein the information input unit comprises:
a downloading subunit for downloading individualized information from an external information entity; and/or
a sound-recording subunit for recording individualized information; and/or
a video-shooting subunit for shooting individualized information; and/or
a photo-taking subunit for taking individualized information.
